# EUROPÄISCHE PATENTSCHRIFT

(11) **EP 1 016 196 B1**
(45) Veröffentlichungstag und Bekanntmachung des Hinweises auf die Patenterteilung: **30.01.2002**
(21) Anmeldenummer: 98954190.9
(22) Anmeldetag: 17.09.1998
(51) Int. Cl.: H02K 15/095, H02K 3/52, H02K 29/00

(54) **STATOR UND VERFAHREN ZUM BEWICKELN EINES STATORS FÜR EINEN BÜRSTENLOSEN GLEICHSTROMMOTOR**
STATOR AND STATOR WINDING METHOD FOR A BRUSHLESS DIRECT-CURRENT MOTOR
STATOR ET PROCEDE DE BOBINAGE DE STATOR POUR MOTEUR A COURANT CONTINU ET SANS BALAIS

(30) Priorität: 17.09.1997 DE 19740937
(43) Veröffentlichungstag der Anmeldung: 05.07.2000
(73) Patentinhaber: TRW Automotive Electronics & Components GmbH & Co. KG, 78315 Radolfzell (DE)
(72) Erfinder: MÜLLER, Jürgen, D-78315 Radolfzell (DE); PETER, Cornelius, D-77815 Brühl (DE); WILKENDORF, Hardy, D-88696 Owingen (DE)
(74) Vertreter: Eder, Thomas, Dr.-Ing.
(86) Internationale Anmeldenummer: DE9802765
(87) Internationale Veröffentlichungsnummer: WO9914840

(56) Entgegenhaltungen:
- EP-A- 0 469 426
- EP-A- 0 739 080
- WO-A-96/22629
- US-A- 4 374 347

## Beschreibung

Die Erfindung betrifft ein Verfahren zum Bewickeln eines Stators für einen bürstenlosen Gleichstrommotor mit den Merkmalen des Oberbegriffs des Patentanspruch 1 sowie einen entsprechenden Stator mit den Merkmalen des Oberbegriffs des Patentanspruchs 5.

Insbesondere in der KFZ-Technik besteht die Anforderung, möglichst einfach ansteuerbare und mit möglichst geringem Aufwand herstellbare und damit kostengünstige motorische Antriebe einzusetzen, beispielsweise für eine elektrisch ansteuerbare Hydraulikpumpe für eine Servolenkung. Für den genannten Anwendungsfall eignen sich infolge des guten Wirkungsgrads und der Wartungsfreundlichkeit vor allem bürstenlose Gleichstrommotoren, insbesondere 4-Phasen-Gleichsstrommotoren.

Um eine möglichst einfache Ansteuerung des Motors zu ermöglichen, werden häufig die jeweils eine Phase realisierenden Wicklungen mittels jeweils eines steuerbaren elektronischen Schalters, beispielsweise eines Leistungshalbleiters, angesteuert und in der erforderlichen Weise zeitweise mit einer Gleichstromquelle verbunden. Dabei besteht jedoch das Problem, dass jeweils beim Ausschalten einer Phase in der betreffenden Wicklung durch die Selbstinduktion eine negative Spannungsspitze entsteht, die über, in Bezug auf die normale Stromrichtung, in Sperrichtung gepolten Dioden, die parallel zu dem jeweiligen Schaltelement liegen, abgebaut werden können. Dies führt jedoch zu einem entsprechenden entgegengesetzt gerichteten Strom, der bei der Ansteuerung berücksichtigt werden muss und der zudem den Wirkungsgrad des Motors negativ beeinträchtigt.

Zur Lösung dieses Problems ist es bekannt, beispielsweise aus der WO-A-96/22629, jeweils zwei Wicklungen eines 4-Phasen-Gleichstrommotors magnetisch zu koppeln. Hierzu werden auf jeden Pol bzw. jede Gruppe von Polen jeweils zwei Wicklungen aufgebracht, die zur Erzeugung der gewünschten entgegengesetzten Polung der durch sie erzeugten Magnetfelder in entgegengesetztem Sinn mit Gleichstrom beaufschlagt werden. Der Wicklungssinn der beiden Wicklungen kann dabei der selbe sein. Es genügt, die Enden einer der beiden Wicklungen umgekehrt mit der Gleichstromquelle zu verbinden.

Durch die so bewirkte magnetische Kopplung der beiden Spulen wird die durch die Selbstinduktion in der betreffenden Wicklung beim Abschalten der jeweiligen Phase induzierte Spannung durch eine in der gekoppelten Wicklung induzierte Spannung kompensiert. Durch die Diode, die dem die gekoppelte Wicklung ansteuernden Schalter parallel geschaltet ist, wird die gespeicherte magnetische Energie abgeführt. Hierdurch ergibt sich eine Verbesserung des Wirkungsgrades.

Aus der WO-A-96/22629 ist ebenfalls bekannt, dass sich eine Verbesserung der magnetischen Kopplung der Wicklungen der entgegengesetzten Phasen eines derartigen 4-Phasen-Gleichstrommotors ergibt, wenn die Wicklungen gleichzeitig gewickelt werden. Hierdurch ergibt sich eine engere Nachbarschaft der Drähte der beiden gekoppelten Wicklungen und damit eine größere Koppelinduktivität.

Eine derartige bifilare Wicklung bei Statoren für bürstenlose Gleichstrommotoren ist auch aus der US-A-4 374 347 bekannt, wobei jeweils die beiden Drähte der Wicklung gleichzeitig gewickelt werden.

Da jedoch infolge der hohen Ströme für jede Wicklung häufig mehrere parallel geschaltete Drähte erforderlich sind, war es notwendig, nach dem Wickelvorgang, bei dem alle parallelen Drähte beider Wicklungen auf einmal gewickelt wurden, die Drahtenden den beiden Wicklungen zuzuordnen. Hierzu war es erforderlich, zumindest die Drahtenden zu markieren oder im Nachhinein eine Zuordnung der Drahtenden mittels Durchgangsmessungen vorzunehmen. Insgesamt war eine

Automatisierung des Wickelvorgangs und des Zuordnens der Drahtenden zu den Wicklungen bzw. des Kontaktierens der Wicklungen nicht möglich.

Der Erfindung liegt daher ausgehend von diesem Stand der Technik die Aufgabe zugrunde, ein Verfahren zum Bewickeln eines Stators für einen bürstenlosen Gleichstrommotor und einen entsprechenden Stator zu schaffen, wobei durch eine Vereinfachung des Herstellungsverfahrens eine Automatisierung des Wikkelvorgangs und des Zuordnens der Drahtenden zu den Wicklungen möglich ist.

Die Erfindung löst diese Aufgabe mit den Merkmalen der Patentansprüche 1 bzw. 5.

Die Erfindung geht von der Erkenntnis aus, dass durch die Aufteilung des Wikkelvorgangs für jeweils zwei gekoppelte Wicklungen (der entgegengesetzten Phasen) in Teilwickelvorgänge eine wesentliche Vereinfachung des Herstellungsverfahrens und damit eine einfache Automatisierbarkeit erreicht wird. Dabei werden in jedem Teilwickelvorgang 2n, vorzugsweise jedoch nur zwei Drähte gewickelt, wobei die eine Hälfte der Drähte bzw. einer der beiden Drähte der einen Wicklung und die andere Hälfte der Drähte bzw. der andere der beiden Drähte der anderen Wicklung zugeordnet wird.

Gegenüber den nach dem bekannten Verfahren hergestellten Statoren ergibt sich zusätzlich der Vorteil, dass die nach dem erfindungsgemäßen Verfahren hergestellten Statoren in der Regel eine noch verbesserte magnetische Kopplung der Wicklungen der jeweils entgegengesetzten Phasen aufweisen. Dies lässt sich dadurch erklären, dass bei einem gleichzeitigen Wickeln aller Drähte der beiden Wicklungen und einem Zuordnen der Drahtenden nach dem Wickelvorgang die Zuordnung und die Lage der einzelnen Drähte innerhalb einer Windung mehr oder weniger zufällig war. Durch das Aufteilen in Teilwickelvorgänge wird zumindest im Mittel eine engere Nachbarschaft der einzelnen Drähte der Wicklungen bzw. eine gleichmäßigere Verteilung (gesehen über den Wicklungsquerschnitt) erreicht. Insbesondere bei einem Wickeln von jeweils nur zwei Drähten (ein Draht pro Wicklung) ist erreichbar, dass diese beiden Drähte über die gesamte Wicklungslänge eng nebeneinander liegen.

Damit ergibt sich zudem eine verbesserte Reproduzierbarkeit der elektrischen Eigenschaften des Stators.

Nach der bevorzugten Ausführungsform des Verfahrens nach der Erfindung werden zur Zuordnung der Leiter zu den beiden Wicklungen vor jedem Teilwickelvorgang das eine Ende des einen der zwei Leiter oder die einen Enden von n der 2n Leiter einem ersten Anschlusskontakt und das eine Ende des anderen der zwei Leiter oder die einen Enden der anderen n der 2n Leiter einem zweiten Anschlusskontakt zugeordnet. Nach jedem Teilwickelvorgang werden das andere Ende des einen der zwei Leiter oder die anderen Enden der n der 2n Leiter einem dritten Anschlusskontakt und das andere Ende des anderen der zwei Leiter oder die anderen Enden der anderen n der 2n Leiter einem vierten Anschlusskontakt zugeordnet. Der erste und dritte Anschlusskontakt dienen somit zur Kontaktierung der einen Wicklung und der zweite und vierte Anschlusskontakt zur Kontaktierung der anderen Wicklung.

Vorzugsweise erfolgt das Zuordnen vor einem Teilwickelvorgang dadurch, dass die (Anfangs-) Enden der Drähte mit den betreffenden Anschlusskontakten verbunden werden, beispielsweise durch Löten, Schweißen oder Klemmen. Durch dieses Fixieren ist bei einem Wickeln mit einer automatischen Wickelvorrichtung kein zusätzliches Halten dieser Enden erforderlich. Nach dem Teilwickelvorgang können die (hinteren) Enden der Drähte ebenfalls mit den entsprechenden Anschlusskontakten verbunden werden.

Insbesondere bei einem gleichzeitigen Wickeln von nur zwei Drähten kann auf einfache Weise die Zuordnung der Drähte während des gesamten Wickelvorgangs aufrecht erhalten werden, so dass für das Zuordnen keinerlei zusätzliche Maßnahmen, wie ein Markieren der Drähte oder Durchgangsmessungen, erforderlich sind.

Bei dem Stator nach der Erfindung sind, vorzugsweise an einer Stirnseite des Stators, Anschlusskontakte vorgesehen, die eine Anzahl von Befestigungsmittel aufweisen, die der Anzahl der erforderlichen Teilwickelvorgänge entsprechen. Damit ist sichergestellt, das vor bzw. nach jedem Teilwickelvorgang die Drahtenden ohne Probleme mit den betreffenden Anschlusskontakten verbunden werden können, wobei für jedes Drahtende bzw. für jede Gruppe von n Drahtenden von 2n gleichzeitig gewickelten Drähten ein eigenes Befestigungsmittel, beispielsweise eine Klemme, zur Verfügung steht.

Weitere Ausführungsformen der Erfindung ergeben sich aus den Unteransprüchen.

Die Erfindung wird nachfolgend anhand eines in der Zeichnung dargestellten Ausführungsbeispiels näher erläutert. In der Zeichnung zeigen:
- Fig. 1: eine schematische Darstellung eines 4-Phasen-Gleichstrommotors mit zugehöriger Ansteuerschaltung;
- Fig. 2: eine perspektivische Darstellung eines Stators nach der Erfindung;
- Fig. 3: eine schematische Darstellung von Auschnitten einer abgewickelten Seitenansicht des Stators in Fig. 1 zur Erläuterung des Wickelverfahrens nach der Erfindung und
- Fig. 4: eine perspektivische Darstellung des Stators in Fig. 1 mit montierter Steuerschaltung.

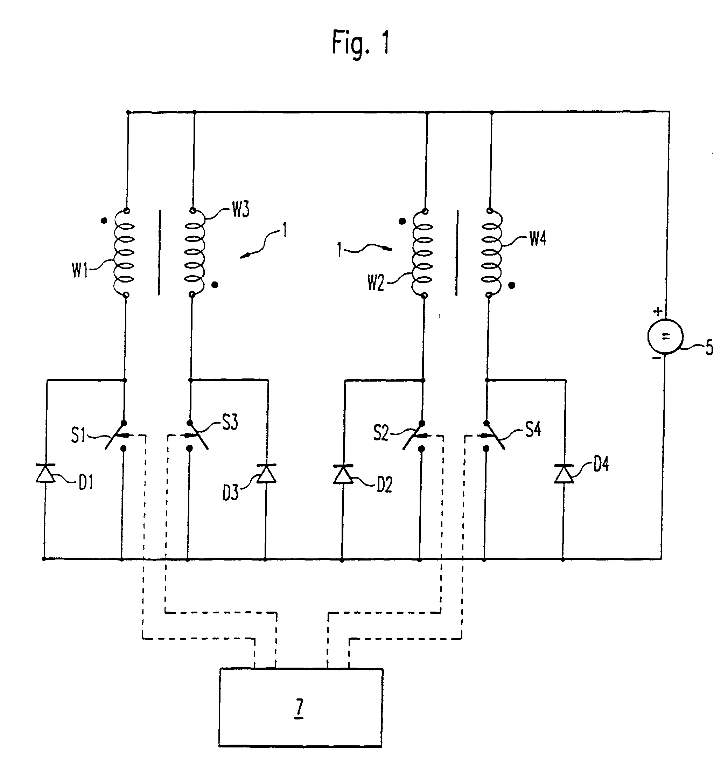

Fig 1 zeigt eine schematische Darstellung eines 4-Phasen-Gleichstrommotors mit einem Stator 1, auf dem Statorwicklungen W1, W2, W3 und W4 vorgesehen sind. Die Wicklungen W1 bis W4 sind auf Zähnen oder Polen 3 des Stators 1 gewickelt. Die angedeutete magnetische Kopplung der entgegengesetzten Phasen I und III bzw. der entsprechenden Wicklungen W1 und W3 sowie der Phasen II und IV bzw. der entsprechenden Wicklungen W2 und W4 wird dadurch erreicht, dass die Wicklungen W1 und W3 bzw. die Wicklungen W2 und W4 auf die selben Statorzähne gewickelt sind.

Die Wicklung bzw. Kontaktierung der Wicklungen W1 und W3 bzw. W2 und W4 erfolgt derart, dass in den Zähnen oder Polen eines nicht dargestellten Rotors zugewandten Bereichen vor den Statorpolen 3 jeweils entgegengesetzte Magnetfelder erzeugt werden. Dies ist in Fig. 1 durch die Punkte an den Wicklungen W1 bis W4 angedeutet.

Jede Wicklung ist mit einem Ende bzw. einem Anschluss mit einer Gleichstromquelle 5 verbunden. Das jeweils andere Ende bzw. der jeweils andere Anschluss jeder Wicklung ist mit einem steuerbaren elektronischen Schalter S1, S2, S3, S4 verbunden, der beispielsweise als Leistungshalbleiter (z.B. Leistungs-FET) ausgebildet sein kann. Jeder der Schalter S1 bis S4 ist mit seinem Steuereingang mit einer Motorsteuereinheit 7 verbunden, welche in an sich bekannter Weise die Wicklungen W1 bis W4 für gewünschte Zeitabschnitte mit der Gleichstromquelle durch eine entsprechende Ansteuerung der Schalter S1 bis S4 verbindet.

Parallel zu jedem steuerbaren Schalter S1 bis S4 ist eine Diode D1 bis D4 geschaltet, wobei die Durchlassrichtung der Dioden so gewählt ist, dass bei einem Schließen des betreffenden Schalters die zugehörige Diode sperrt.

Wie bereits erläutert, wird durch die Kopplung der jeweils entgegengesetzten Phasen I und III bzw. II und IV und die Dioden D3 und D1 bzw. D4 und D2 ein Abführen der gespeicherten magnetischen Energie beim Abschalten der betreffenden Phase erreicht, wodurch eine Verbesserung des Wirkungsgrades des Motors gewährleistet ist.

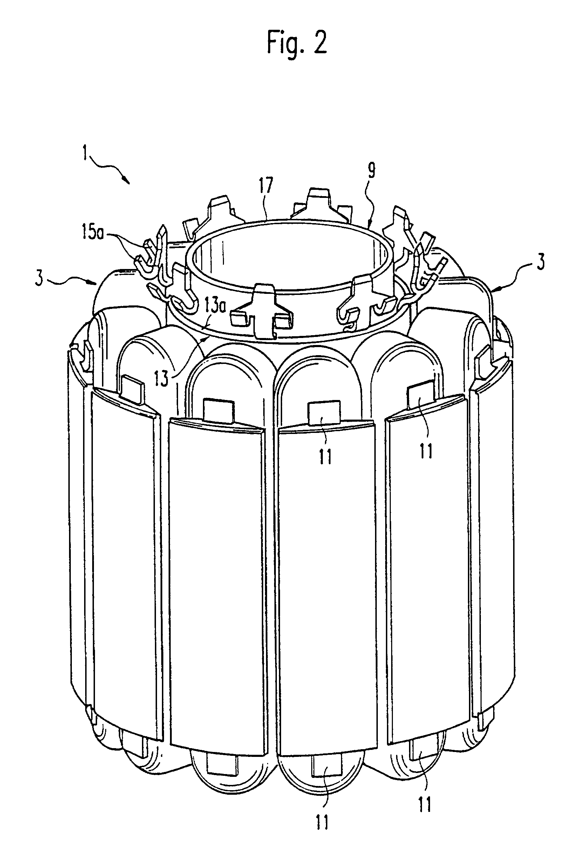

Fig. 2 zeigt den konstruktiven Aufbau eines entsprechenden Stators 1 in perspektivischer Ansicht. Der gezeigt Stator weist zwölf Statorpole 3 auf. Der Statorkörper 9 umfasst in üblicher Weise paketierte Statorbleche, welche sich senkrecht zur Längsachse des Stators erstrecken. Das Paket der Statorbleche kann zunächst in üblicher Weise durch Stanzpaketieren hergestellt werden, wobei jeweils zwei oder mehrere Bleche durch Ausüben eines punktförmigen Drucks verbunden werden.

Anschließend wird das Paket von Statorblechen mit einem Kunststoffkörper umspritzt, wobei auch im Innenbereich der Statorzähne eine Kunststoffauflage erzeugt wird. Hierdurch ist es nicht mehr nötig, wie bisher eine Pulverbeschichtung dieser Bereiche der Statorzähne vorzunehmen, um eine Beschädigung der Isolationsschicht der Wicklungsdrähte, insbesondere während des Wickelvorgangs, zu vermeiden.

Gleichzeitig werden an die Stirnseiten der Statorzähne 3 Wickelhilfen 11 angespritzt, welche während des Wickeins der Wicklungen W 1 bis W4 eine Führung der Drähte bewirken und gleichzeitig die über die Stirnseiten der Statorzähne 3 hinausragenden Teile der Wicklungen in ihrer Lage fixieren.

An seiner Oberseite weist der Statorkörper 9 einen angespritzten Ring 13 mit einer Schulter 13a auf. In diese stirnseitige Schulter 13 a sind Anschlusskontakte 15 eingepresst. Hierzu wird der Ring 13 mit entsprechenden Ausnehmungen für die Anschlusskontakte gespritzt, in welche dann die beispielsweise durch Stanzen und Biegen aus Blech hergestellten Anschlusskontakte 15 mit ihren Füßen eingepresst werden.

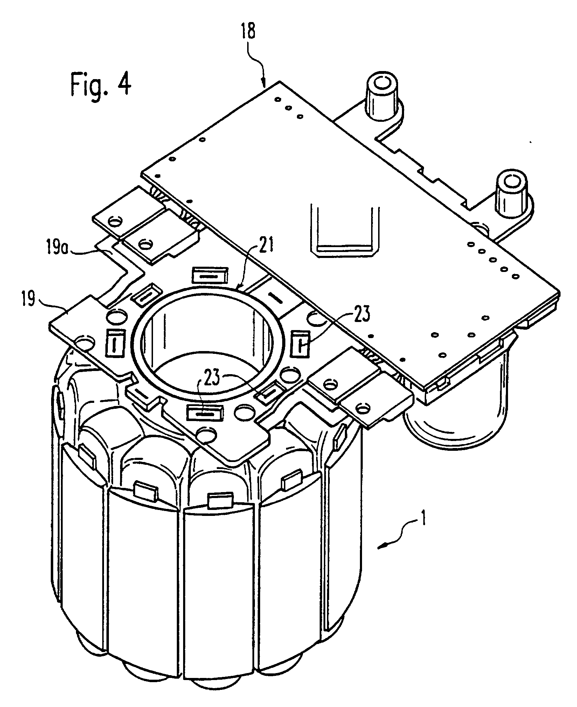

Die sich oberhalb der Schulter 13a des Rings 13 nach oben erstreckende Wandung 17 des Rings 13 dient zur Fixierung und Halterung einer Steuerschaltung 17, wie aus Fig. 4 erkennbar. Die Steuerschaltung 17 kann hierzu ein kunststoffumspritztes Stanzgitter 19 mit einer entsprechenden Ausnehmung 21 aufweisen, in welche die Wandung 17 des Rings 13 eingreift. Die Unterseite des Stanzgitters 19 kann dabei auf der Schulter 13a des Rings 13 aufliegen.

Die Anschlusskontakte 15 greifen in Kontaktierungsdurchbrüche 23 in den Leiterzügen 19a des Stanzgitters 19 ein und können durch Verlöten oder dergl. mit diesen verbunden werden.

Durch das Umspritzen des Pakets von Statorblechen in einem einzigen Arbeitschritt mit Kunststoff, wobei die Innenbereiche der Statorzähne 3 umspritzt werden und gleichzeitig der Ring 13 und die Wickelhilfen 11 angespritzt werden, ergibt sich eine äußerst kostengünstige Herstellung des Stators 1.

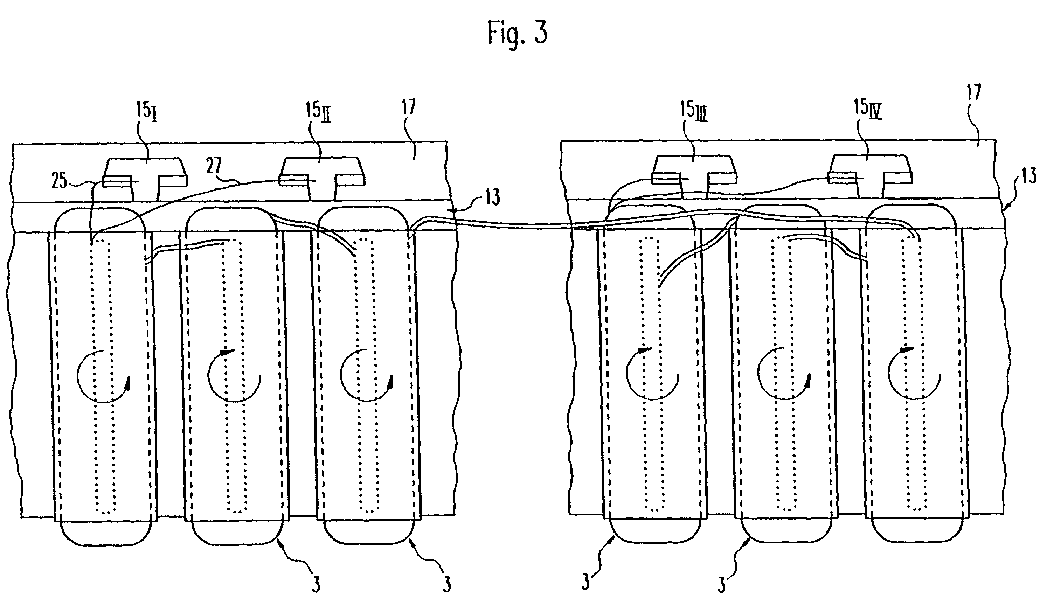

Im Folgenden wird anhand von Fig. 3 das Verfahren zum Bewickeln des Stators 1 erläutert:

Zunächst sei bemerkt, dass sich im dargestellten Ausführungsbeispiel jede der Wicklungen W1 bis W4 über insgesamt sechs Statorzähne 3 erstreckt, welche in an sich bekannter Weise in zwei einander radial gegenüberliegende Gruppen von jeweils drei benachbarten Statorzähnen aufgeteilt sind. Wie bereits erläutert, tragen diese sechs Statorzähne jeweils zwei gekoppelte Wicklungen, also die Wicklungen W1 und W3 oder W2 und W4. Zwei dieser Gruppen sind in Fig. 3 dargestellt, wobei im Folgenden der Einfachheit halber diese Wicklungen als W 1 und W3 bezeichnet werden. Die verbleibenden sechs Statorzähne 3 für die Wicklungen W2 und W4 sind analog gewickelt. Diesbezüglich ist das im Folgenden beschriebene Verfahren entsprechend anzuwenden.

Jede der Wicklungen W1 und W3 besteht wegen der erforderlichen hohen Stromstärken aus mehreren parallel geschalteten Teilwicklungen einzelner Drähte. Erfindungsgemäß werden jeweils 2 oder 2n Drähte (d.h. eine gerade Anzahl von Drähten), im dargestellten Ausfühungsbeispiel die beiden Drähte 25, 27, gleichzeitig auf die betreffenden Statorzähne 3 gewickelt.

Hierzu werden zunächst die Anfangsenden der 2 Drähte 25, 27 jeweils mit einem ersten 15_{I} und einem zweiten 15_{II} der Anschlusskontakte 15 verbunden. Hierzu weisen die Anschlusskontakte V-förmige Klemmnuten 15a auf, in welche die Drahtenden (abisoliert) eingelegt und durch Zusammenbiegen der Wandungen der Klemmnuten 15a fixiert und kontaktiert werden.

Nach dem Fixieren der Drahtenden wird der erste Statorzahn 3 der ersten Dreiergruppe bewickelt. Dies geschieht bei dem in Fig. 3 dargestellten Ausführungsbeispiel entgegen dem Uhrzeigersinn. Nach dem Aufbringen der gewünschten Anzahl von Windungen wird auf den benachbarten Statorzahn übergegangen und dieser im entgegengesetzten Sinn mit der gewünschten Anzahl von Windungen bewickelt (der mittlere Statorzahn 3 der linken Gruppe in Fig. 3). Schließlich wird auf den letzten Statorzahn der ersten Dreiergruppe übergegangen und dieser mit der gewünschten Anzahl von Windungen versehen. Dies erfolgt wieder im Wicklungssinn des ersten Statorzahns.

Anschließend wird auf den ersten Statorzahn der diametral gegenüberliegenden Dreiergruppe übergegangen (in Fig. 3 der rechte Statorzahn der rechten Dreiergruppe) und dieser bewickelt. Das Bewickeln dieser zweiten Dreiergruppe von Statorzähnen erfolgt analog.

Nach dem Bewickeln des letzten Statorzahns der zweiten Dreiergruppe (der linke Statorzahn der rechten Dreiergruppe in Fig. 3) wird das Ende des Drahts 25 mit dem dritten Anschlusskontakt 15_{III} und das Ende des Drahts 27 mit dem vierten Anschlusskontakt 15_{IV} verbunden. Die Zuordnung der Drahtenden zu den Anschlusskontakten 15 ist bei diesem ersten Teilwickelvorgang zunächst unerheblich. Selbstverständlich muss jedoch festgehalten werden, welche der Anschlusskontakte 15 mit diesen Wicklungen W1 und W3 korrespondieren. Mit anderen Worten es muss für die spätere Ansteuerung der Wicklungen bekannt sein, welche der beiden Wicklungen mit welchen beiden Anschlusskontakten korrespondieren. Die Wicklungen W1 und W3 untereinander sind gleichwertig, da sie den selben Wicklungssinn aufweisen.

Nach Beendigung dieses ersten Teilwickelvorgangs erfolgt in gleicher Weise ein zweiter Teilwickelvorgang. Der einzige Unterschied besteht darin, dass die Drahtenden mit weiteren Befestigungsmitteln bzw. Klemmnuten 15a der ersten bis vierten Anschlusskontakte verbunden werden. Dies ermöglicht eine einfache Befestigung der Drahtenden, ohne dass die Ende der zuvor gewickelten Drähte gelöst werden müssten.

Bei diesem zweiten und ggf. folgenden Teilwickelvorgängen muss jedoch darauf geachtet werden, dass die beim ersten Teilwickelvorgang gewählte Zuordnung der Anschlusskontakte 15_{I} und 15_{III} zu einer Wicklung, beispielsweise der Wicklung W1, bzw. der Anschlusskontakte 15_{II} und 15_{IV} zur anderen Wicklung, beispielsweise der Wicklung W3 eingehalten wird.

Üblicherweise wird man jedoch ohnehin von vornherein festlegen, dass ganz bestimmte Anschlusskontakte mit ganz bestimmten Wicklungen ggf. Wicklungsenden korrespondieren.

Durch das Zuordnen der Drahtenden zu bestimmten Anschlusskontakten bereits vor dem Wickeln und das Aufrechterhalten der Zuordnung während des Teilwikkelvorgangs ist es auf einfache Weise möglich, ohne zusätzliche Maßnahmen, wie das Markieren der Drähte oder das Durchführen von Durchgangsmessungen, nach dem Teilwickelvorgang die Drahtenden korrekt mit den richtigen Anschlusskontakten zu verbinden. Dies gilt insbesondere bei einer geringen Anzahl von gleichzeitig gewickelten Drähten (vorzugsweise zwei Drähte).

Insgesamt werden so viele Teilwickelvorgänge durchgeführt bis die erforderliche Anzahl von parallelen Drähten pro Wicklung W1, W3 aufgebracht ist. Die Anzahl der Befestigungsmittel bzw. Klemmnuten 15a an den Anschlusskontakten entspricht dabei vorzugsweise der Anzahl der erforderlichen Teilwickelvorgänge.

Die beiden anderen gekoppelten Wicklungen W2 und W4 werden in analoger Weise hergestellt, wobei darauf zu achten ist, dass der Wicklungssinn auch in Bezug auf die bereits erstellten Wicklungen W1 und W3 korrekt zu wählen ist.

Das dargestellte Verfahren lässt sich selbstverständlich nicht nur für 4-Phasen-Gleichstrommotoren anwenden, sondern auch für Motoren mit einer beliebigen (geraden) Anzahl von Phasen, wobei jeweils die Wicklungen zweier Phasen magnetisch gekoppelt sind.

## Patentansprüche

1. Verfahren zum Bewickeln eines Stators für einen bürstenlosen Gleichstrommotor,
a) welcher einen Statorkörper (9) mit einer vorbestimmten Anzahl von zu bewickelnden Statorzähnen (3) aufweist,
b) wobei die Statorzähne (3) jeweils mit zwei Wicklungen (W1, W3; W2, W4) bewickelt werden, die magnetische gekoppelt sind und durch die Bestromung mit unterschiedlichem Richtungssinn die Erzeugung von entgegengesetzten Magnetfeldern ermöglichen, und
c) wobei jede der beiden Wicklungen (W1, W3; W2, W4) aus einer vorbestimmten Anzahl parallel geschalteter Leiter besteht,
**dadurch gekennzeichnet,**
d) dass die Statorzähne (3) in mehreren Teilwickelvorgängen jeweils gleichzeitig mit zwei Leitern (25, 27) oder einer geraden Anzahl von 2n Leitern bewickelt werden,
e) dass einer der beiden Leiter (25, 27) oder n Leiter der 2n Leiter der einen Wicklung und der andere der beiden Leiter (25, 27) oder die anderen n Leiter der 2n Leiter der anderen Wicklung zugeordnet werden und
f) dass eine vorbestimmte Anzahl von Teilwickelvorgängen durchgeführt wird, bis die vorbestimmte Anzahl von Leitern pro Wicklung (W1, W3; W2, W4) erreicht ist.

2. Verfahren nach Anspruch 1, **dadurch gekennzeichnet, dass** zur Zuordnung der Leiter (25, 27) zu den beiden Wicklungen (W1, W3) vor jedem Teilwickelvorgang das eine Ende des einen (25) der zwei Leiter (25, 27) oder die einen Enden von n der 2n Leiter einem ersten Anschlusskontakt (15_{I}) und das eine Ende des anderen (27) der zwei Leiter (25, 27) oder die einen Enden der anderen n der 2n Leiter einem zweiten Anschlusskontakt (15_{II}) zugeordnet werden und dass nach jedem Teilwickelvorgang das andere Ende des einen (25) der zwei Leiter (25, 27) oder die anderen Enden der n der 2n Leiter einem dritten Anschlusskontakt (15_{III}) und das andere Ende des anderen (27) der zwei Leiter (25, 27) oder die anderen Enden der anderen n der 2n Leiter einem vierten Anschlusskontakt (15_{IV}) zugeordnet werden.

3. Verfahren nach Anspruch 2, **dadurch gekennzeichnet, dass** das eine Ende des einen (25) der zwei Leiter (25, 27) oder die einen Enden der n der 2n Leiter vor dem Teilwickelvorgang mit dem ersten Anschlusskontakt (15_{I}) und das eine Ende des anderen (27) der zwei Leiter (25, 27) oder die einen Enden der anderen n der 2n Leiter mit dem zweiten Anschlusskontakt (15_{II}) verbunden werden.

4. Verfahren nach einem der Ansprüche 1 bis 3, **dadurch gekennzeichnet, dass** die gleichzeitig gewickelten Leiter (25, 27) während des Wickelvorgangs eng benachbart und vorzugsweise in über den Wickelvorgang aufrechterhaltener Lage geführt werden.

5. Stator für einen bürstenlosen Gleichstrommotor,
a) welcher einen Statorkörper (9) mit einer vorbestimmten Anzahl von bewickelten Statorzähnen (3) aufweist,
b) wobei die Statorzähne (3) jeweils mit zwei Wicklungen (W1, W3; W2, W4) bewickelt sind, die magnetische gekoppelt sind und durch die Bestromung mit unterschiedlichem Richtungssinn die Erzeugung von entgegengesetzten Magnetfeldern ermöglichen, und
c) wobei jede der beiden Wicklungen (W1, W3 bzw. W2, W4) aus einer vorbestimmten Anzahl parallel geschalteter Leitern besteht,
**dadurch gekennzeichnet,**
d) dass jeweils zwei Leiter (25, 27), von denen ein Leiter der einen Wicklung und der andere Leiter der anderen Wicklung zugeordnet ist, oder 2n Leiter, von denen n Leiter der einen Wicklung und die anderen n Leiter der anderen Wicklung zugeordnet sind, über in die gesamte Wicklungslänge in einer im Wesentlichen zueinander konstanten Lage geführt sind.
e) dass der Statorkörper (9) vorzugsweise an einer Stirnseite Anschlusskontakte (15) aufweist, welche jeweils mit den Enden der die jeweils zwei magnetisch gekoppelten Wicklungen (W1, W3; W2, W4) bildenden Leiter verbunden sind.
f) dass die Anschlusskontakte (15) eine Anzahl von Befestigungsmittel (15a) aufweisen, welche der Anzahl der erforderlichen Teilwickelvorgänge nach dem Verfahren nach einem der Ansprüche 1 bis 4 entsprechen.

6. Stator nach Anspruch 5, **dadurch gekennzeichnet, dass** die jeweils zwei oder 2n Leiter eng benachbart geführt sind.

7. Stator nach Anspruch 5 oder 6, **dadurch gekennzeichnet, dass** die Anschlusskontakte (15) gleichzeitig zur elektrischen Kontaktierung und mechanischen Halterung einer vorzugsweise ein Stanzgitter (19) oder eine gedruckte Leiterplatte aufweisenden Steuerschaltung (17) dienen.

8. Stator nach einem der Anspruche 5 bis 7, **dadurch gekennzeichnet, dass** die ersten und zweiten (15_{I}, 15_{II}), vorzugsweise auch die dritten und vierten Anschlusskontakte (15_{III}, 15_{IV}) Befestigungsmittel (15a) aufweisen, welche ein nacheinander erfolgendes Verbinden, insbesondere Klemmen, von Leiter-enden ermöglichen, ohne dass ein Lösen bereits verbundener Leiterenden erforderlich ist.

## Claims

1. Method of winding a stator for a brushless DC motor,
a) which has a stator body (9) with a predetermined number of stator teeth (3) to be wound,
b) the stator teeth (3) respectively being wound with two windings (W1, W3; W2, W4) which are magnetically coupled and render it possible to generate opposing magnetic fields by having current applied in different directions, and
c) each of the two windings (W1, W3; W2, W4) consisting of a predetermined number of conductors connected in parallel,
**characterized**
d) in that the stator teeth (3) are wound in a plurality of partial winding operations, in each case simultaneously with two conductors (25, 27) or an even number of 2n conductors,
e) in that one of the two conductors (25, 27) or n conductors of the 2n conductors of one winding, and the other ones of the two conductors (25, 27) or the other n conductors of the 2n conductors are assigned to the other winding, and
f) in that a predetermined number of partial winding operations are carried out until the predetermined number of conductors per winding (W1, W3; W2, W4) is reached.

2. Method according to Claim 1, **characterized in that**, in order to assign the conductors (25, 27) to the two windings (W1, W3), before each partial winding operation one end of one (25) of the two conductors (25, 27), or the first ends of n of the 2n conductors are assigned to a first terminal contact (15_{I}), and one end of the other one (27) of the two conductors (25, 27), or the first ends of the other n of the 2nd conductors are assigned to a second terminal contact (15_{II}), and **in that** after each partial winding operation the other end of one (25) of the two conductors (25, 27), or the other ends of the n of the 2n conductors are assigned to a third terminal contact (15_{III}), and the other end of the other one (27) of the two conductors (25, 27) or the other ends of the other n of the 2n conductors are assigned to a fourth terminal contact (15_{IV}).

3. Method according to Claim 2, **characterized in that** one end of one (25) of the two conductors (25, 27) or the first ends of n of the 2n conductors are connected to the first terminal contact (15_{I}) before the partial winding operation, and one end of the other one (27) of the two conductors (25, 27), or the first ends of the other n of the 2n conductors are connected to the second terminal contact (15_{II}).

4. Method according to one of Claims 1 to 3, **characterized in that** the simultaneously wound conductors (25, 27) are guided during the winding operation in a closely neighbouring fashion and preferably in a position maintained over the winding operation.

5. Stator for a brushless DC motor,
a) which has a stator body (9) with a predetermined number of wound stator teeth (3),
b) the stator teeth (3) respectively being wound with two windings (W1, W3; W2, W4) which are magnetically coupled and render it possible to generate opposing magnetic fields by having current applied in different directions, and
c) each of the two windings (W1, W3 or W2, W4) consisting of a predetermined number of conductors connected in parallel,
**characterized**
d) in that in each case two conductors (25, 27), of which one conductor is assigned to one winding and the other conductor to the other winding, or 2n conductors, of which n conductors are assigned to one winding and the other n conductors to the other winding, are guided over the entire winding length in an essentially constant position relative to one another,
e) in that the stator body (9) preferably has on an end face terminal contacts (15) which are respectively connected to the ends of the conductors forming the in each case two magnetically coupled windings (W1, W3; W2, W4), and
f) in that the terminal contacts (15) have a number of fastening means (15a) which correspond to the number of the required partial winding operations according to the method according to one of Claims 1 to 4.

6. Stator according to Claim 5, **characterized in that** the in each case two or 2n conductors are guided in a closely neighbouring fashion.

7. Stator according to Claim 5 or 6, **characterized in that** the terminal contacts (15) simultaneously serve to make electric contact with and mechanically hold a switching control device (17) preferably having a pierced grating (19) or a printed circuit board.

8. Stator according to one of Claims 5 to 7, **characterized in that** the first and second terminal contacts (15_{I}, 15_{II}), preferably also the third and fourth terminal contacts (15_{III}, 15_{IV}) have fastening means (15a) which permit conductor ends to be connected, in particular clamped successively without the need for already connected conductor ends to be disconnected.

## Revendications

1. Procédé pour le bobinage d'un stator destiné à un moteur à courant continu sans balai,
a) qui présente un corps de stator (9) avec un nombre prédéterminé de dents de stator (3) à bobiner,
b) les dents de stator (3) étant respectivement bobinées avec deux enroulements (W1,W3,W2,W4), qui sont couplés magnétiquement et, par l'alimentation en courant avec un sens directionnel différent, permettent la génération de champs magnétiques opposés, et
c) chacun des deux enroulements (W1,W3;W2,W4) étant constitué d'un nombre prédéterminé de conducteurs montés parallèlement,
**CARACTERISE EN CE QUE**,
d) les dents de stator (3) sont bobinées en plusieurs opérations de bobinage partiel respectivement simultanément avec deux conducteurs (25,27) ou un nombre pair de 2n conducteurs,
e) l'un des deux conducteurs (25,27) ou n conducteurs des 2n conducteurs sont affectés à un enroulement et l'autre des deux conducteurs (25,27) ou les autres n conducteurs des 2n conducteurs sont affectés à l'autre enroulement et
f) un nombre prédéterminé d'opérations de bobinage partiel est réalisé, jusqu'à l'obtention du nombre prédéterminé de conducteurs par enroulement (W1,W3;W2,W4).

2. Procédé selon la revendication 1, **caractérisé en ce que** pour l'affectation des conducteurs (25,27) aux deux enroulements (W1,W3), avant chaque opération de bobinage partiel, on affecte une extrémité de l'un (25) des deux conducteurs (25,27) ou les extrémités de n des 2n conducteurs à un premier contact de connexion (15_{I}) et une extrémité de l'autre (27) des deux conducteurs (25,27) ou on affecte les extrémités des autres n des 2n conducteurs à un deuxième contact de connexion (15_{II}) et **en ce qu'**après chaque opération de bobinage partiel on affecte l'autre extrémité de l'un ((25) des deux conducteurs (25,27) ou les autres extrémités des n des 2n conducteurs à un troisième contact de connexion (15_{III}) et l'autre extrémité des autres n des 2n conducteurs à un quatrième contact de connexion (15_{IV}).

3. Procédé selon la revendication 2, **caractérisé en ce qu'**une extrémité de l'un (25) des deux conducteurs (25,27) ou les extrémités des n des 2n conducteurs sont raccordées avant l'opération de bobinage partiel au premier contact de connexion (15_{I}) et l'extrémité de l'autre (27) des deux conducteurs (25,27) ou les extrémités des autres n des 2n conducteurs sont raccordés au deuxième contact de connexion (15_{II}).

4. Procédé selon l'une des revendications 1 à 3, **caractérisé en ce que** les conducteurs (25,27) bobinés simultanément pendant l'opération de bobinage partiel sont étroitement limitrophes et sont guidés de préférence sur la position maintenue par l'opération de bobinage.

5. Stator pour un moteur à courant continu sans balais,
a) qui présente un corps de stator (9) avec un nombre prédéterminé de dents de stator bobinées,
b) les dents de stator (3) étant respectivement bobinées avec deux enroulements (W1,W3;W2,W4) qui sont couplés magnétiquement et, par l'alimentation en courant avec un sens directionnel différent, permettent la génération de champs magnétiques opposés, et
c) chacun des deux enroulements (W1,W3 ou W2,W4) consistant en un nombre prédéterminé de conducteurs montés parallèlement,
**CARACTERISE EN CE QUE**,
d) respectivement deux conducteurs (25,27), dont un conducteur est affecté à un enroulement et l'autre conducteur est affecté à l'autre enroulement, ou 2n conducteurs, dont n conducteurs sont affectés à un enroulement et les autres n conducteurs sont affectés à l'autre enroulement, sont guidés sur la position essentiellement constante entre eux sur toute la longueur de l'enroulement,
e) le corps de stator (9) présente de préférence sur un côté frontal des contacts de connexion (15) qui sont raccordés aux extrémités des conducteurs formant respectivement deux enroulements couplés magnétiquement (W1,W3;W2,W4),
f) les contacts de connexion (15) présentent un nombre de moyens de fixation (15a) qui correspondent au nombre d'opérations de bobinage partiel nécessaires selon le procédé des revendications 1 à 4.

6. Stator selon la revendication 5, **caractérisé en ce que** respectivement les deux ou 2n conducteurs sont guidés de façon étroitement limitrophe.

7. Stator selon la revendication 5 ou 6, **caractérisé en ce que** les contacts de connexions (15) servent simultanément de mise en contact électrique et de fixation mécanique d'un circuit de commande (17) présentant de préférence un grillage estampé (19) ou une plaquette de circuits imprimés.

8. Stator selon l'une des revendications 5 à 7, **caractérisé en ce que** les premiers et deuxième (15_{I},15_{II}), de préférence également les troisième et quatrième contacts de connexion (15_{III}, 15_{IV}) présentent des moyens de fixation (15a) qui permettent un raccordement consécutif, en particulier un blocage d'extrémités de conducteurs sans nécessiter un détachement d'extrémités de conducteurs déjà raccordés.
